# EUROPEAN PATENT SPECIFICATION

(11) **EP 1 424 053 B1**
(45) Date of publication and mention of the grant of the patent: **17.09.2008**
(21) Application number: 03257511.0
(22) Date of filing: 28.11.2003
(51) Int. Cl.: A61G 3/06, B60P 1/43

(54) **Access apparatus**
Zugangsvorrichtung
Appareil d'accès

(30) Priority: 30.11.2002 GB 0228022
(43) Date of publication of application: 02.06.2004
(73) Proprietor: Greenwood, Stephen Michael, Keighley, West Yorkshire BD20 6BH (GB)
(72) Inventor: Greenwood, Stephen Michael, Keighley, West Yorkshire BD20 6BH (GB)
(74) Representative: Jackson, Nicholas Andrew

(56) References cited:
- AU-B- 721 282
- DE-A- 19 833 612
- GB-A- 2 268 133
- GB-A- 2 301 082
- GB-A- 2 306 152
- US-A- 4 476 959
- US-B1- 6 186 734

## Description

### Field of the Invention

The present invention relates to access apparatus for a vehicle, a vehicle including access apparatus and a method of providing access to a vehicle.

### Background to the Invention

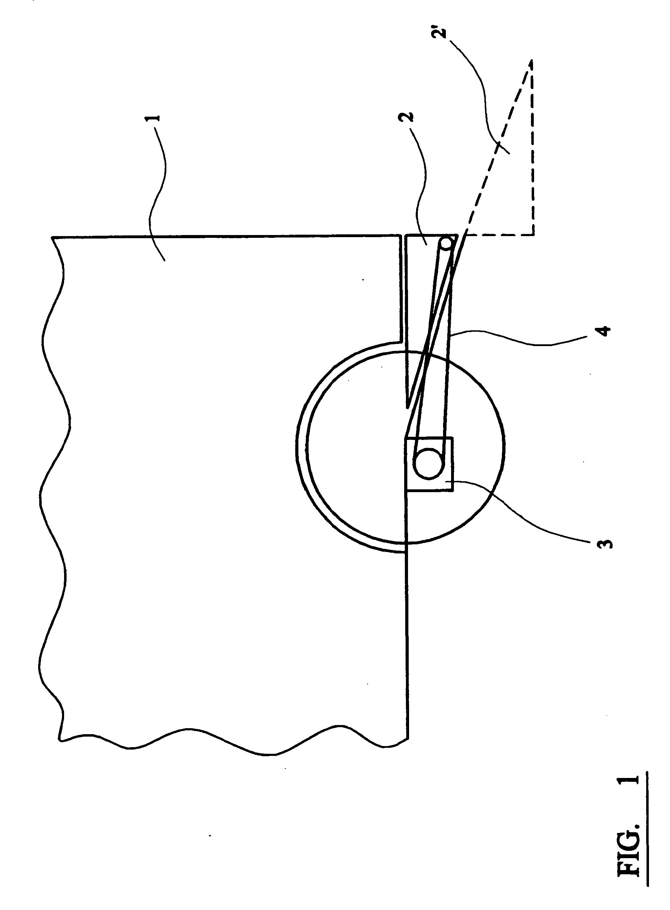

Vehicles, and in particular ambulances, comprise a rear ramp to enable trolleys to be wheeled up the ramp and into the ambulance. Conventional ambulances 1 comprise a ramp section 2 and a motor 3 mounted on the vehicle for pivoting the ramp 2 into position, as shown in Figure 1. The motor is connected to the ramp by a chain mechanism 4 to drive the ramp from a storage position 2 to the access position 2'. However, particles, for example sand or debris or grit, may enter into the mechanism and in particular may enter into the clutch mechanism. If the motor 3 or chain mechanism 4 or clutch do not work properly then in order to fix this the ambulance 1 must be taken out of action and may be out of action for a few days whilst the problem is repaired. Accordingly, this is not efficient and results in valuable apparatus not being available for significant periods of time. GB 2 306 152 discloses a ramp assembly similar to the above, wherein the ramp is pivotably moveable by a rack and pinion,
wherein the rack and pinion is mounted on a frame that is fixed to the floor structure of a vehicle.

In addition, ramps for ambulances may be manually moveable in the event that the motor fails. Prior art ramps are constructed from heavy steel plates and, accordingly, are heavy. Such prior art ramps generally require two ambulance men to lift and move the ramps manually. Due to the weight of the ramps, this poses an injury risk to the ambulance men and, especially, a risk of back injuries.

There are several requirements that ramps for ambulances must meet. These include the ramp having a failsafe mechanism whereby if the ramp meets an obstruction, movement of the ramp must stop.

Prior art ramps use slip hubs which come into operation if the ramp meets an obstruction. However, slip hubs do not stop the motor running and merely prevents the driving force being transmitted into further movement of the ramp. Accordingly, a pressure force may be exerted on the obstruction. The removal of the obstruction, if possible, then enables the ramp to automatically continue its movement. This can be dangerous if, for example, the ramp has trapped an object since it may be difficult to remove the trap object as a result of the pressure force being exerted.

It is an aim of the present invention to overcome at least one problem associated with the prior art whether referred to herein or otherwise.

### Summary of the Invention

According to a first aspect of the present invention, there is provided access apparatus for a vehicle, the apparatus comprising: access means that is movable between a storage position and an access position, wherein the access means provides a generally inclined access surface to the vehicle whilst in the access position; and drive means to move the access means between the storage position and the access position; characterised in that the access means is arranged to be releasably connected to a vehicle and the drive means is mounted on the releasably connected access means.

Preferably the access means provides a first support surface whilst in the access position.

Preferably, the access means comprises a ramp.

The access means may comprise stepped access means.

Preferably, the access means is arranged to be releasably connected to a vehicle by a quick release mechanism.

Preferably the access means is arranged to be releasably connected to an ambulance. The access means may be arranged to be releasably connected to a commercial vehicle.

Preferably, the drive means is contained within the housing of the access means.

Preferably, the housing provides a first support surface and a second support surface. Preferably, the first and second support surfaces generally taper towards each other from a first longitudinal end of the access means to a second longitudinal end of the access means. Preferably, at the second longitudinal end the first support surface joins the second support surface. Preferably, at the first longitudinal end the first support surface is connected to the second support surface by a spacer wall. The first support surface may provide a ramp portion. The first support surface may provide at least one step or a plurality of steps.

Preferably, the drive means comprises an electric motor and may comprise two electric motors.

Preferably, the access means comprises a first securement lug and a second securement lug. Preferably, one securement lug is provided on the left lateral side of the access means and one securement member may be provided on the right lateral side of the access means. Preferably, the securement lugs are provided adjacent to the first longitudinal end of the access means. Preferably, the securement lugs are arranged to locate within securement means provided by the vehicle. Preferably, the securement means comprises receiving portions to slidably receive each securement lug.

Preferably, each securement lug is retained in the securement means by movement of a locking member and preferably by rotation of a lever. Accordingly, the first lug may be secured by a first lever and the second lug may be secured by a second lever. The lever may comprise a shaped portion and preferably a cam portion in order to retain and lock the respective securement lug relative to the securement means. Preferably, the securement lug, once secured, is not rotatable relative to the vehicle.

Preferably, the drive means causes the access means to pivot or rotate about a pivotal axis relative to the vehicle. Preferably, the pivotal axis comprises the securement lugs.

Preferably, the drive means comprises a clutch.

Preferably, the apparatus comprises a power source. Preferably the power source is not provided on the access means. Preferably, the power source comprises the battery of the vehicle.

The power source may be connected to the drive means by connection means. The connection means may comprise connectors to transmit the power from the power source to the drive means.

Preferably, when the access means is unattached from the vehicle, the connectors automatically disconnect the power source from the drive means. Similarly, the power source may be automatically connected to the drive means when the access means is mounted to the vehicle.

Preferably the access means has a first support surface which enables wheeled apparatus to travel thereover and into the vehicle whilst the access means is in the access position.

The access means may have a first support surface providing at least one step in order for access to be provided by means of the or each step whilst the access means is in the access position. The first support surface may comprise a plurality of steps.

Preferably, the access means provides a second support surface when the access means is in the storage position. Preferably, the second support surface is arranged to be co-planar with the floor of the vehicle when the access means is in the storage position.

According to a second aspect of the present invention, there is provided a vehicle having access apparatus, the access apparatus comprising: access means that is movable between a storage position and an access position, wherein the access means provides a first support surface whilst in the access position; and drive means to move the access means relative to the vehicle between the storage position and the access position; characterised in that the access means is arranged to be releasably mounted to the vehicle and the drive means is mounted on the releasably connected access means.

Preferably, the access means is releasably mounted using a quick release mechanism.

Preferably, the vehicle is an ambulance. The vehicle may be a commercial vehicle.

The vehicle may provide an upper access surface. The vehicle may provide an upper access surface which enables wheeled apparatus to travel thereover and into the vehicle whilst the access means is in the access position. The upper access surface and the first support surface may provide a contiguous ramp. Preferably, the upper access surface is not movable relative to the vehicle. Preferably, the upper access surface provides a support surface when the access means is in the access position. Preferably, the upper access surface is provided by a part of the vehicle.

The apparatus may comprise an upper access surface which provides at least one step. The upper access surface may provide a plurality of steps. The first support surface may co-operate with the upper access surface to provide a series of steps. Preferably the upper access surface is not movable relative to the vehicle. Preferably the upper access surface provides a support surface when the access means is in the access position. Preferably the upper access surface is provided by a part of the vehicle. Preferably the upper access surface is concealed when the access means is in the storage position.

Preferably, the first support surface of the access means is arranged, in use, to locate adjacent to and facing the upper access surface when the access means is in the storage position.

According to a third aspect of the present invention, there is provided a method of providing access to a vehicle, the method comprising: providing access apparatus for the vehicle, the access apparatus comprising access means that is moveable between a storage position and an access position, wherein the access means 12 provides a first support surface whilst in the access position, and drive means to move the access means relative to the vehicle between the storage position and the access position; and **characterised in that** the method includes causing the drive to move the access means wherein the acess means is arranged to be releasably connected to the vehicle and the drive means is mounted on the releasably connected access means.

Preferably, the method comprises releasably mounting the access means to the vehicle and preferably comprises mounting the access means to the vehicle using a quick release mechanism.

### Brief Description of the Drawings

The present invention will now be described, by way of example only, with reference to the drawings that follow, in which:
Figure 1 is a side schematic view of a prior art ambulance ramp.
Figure 2 is a side view of an ambulance including an embodiment of the present invention.
Figure 3 is a side view of an embodiment of the present invention in a first storage position.
Figure 4 is a plan view of an embodiment of the present invention.
Figure 5 is a plan schematic view of part of an embodiment of the present invention.
Figure 6 is a side view of part of an embodiment of the present invention.
Figure 7 is a side view of part of an embodiment of the present invention.
Figure 8 is a side view of securement means for an embodiment of the present invention provided on an ambulance.
Figure 9 is a plan schematic view of part of an embodiment of the present invention.

### Description of the Preferred Embodiments

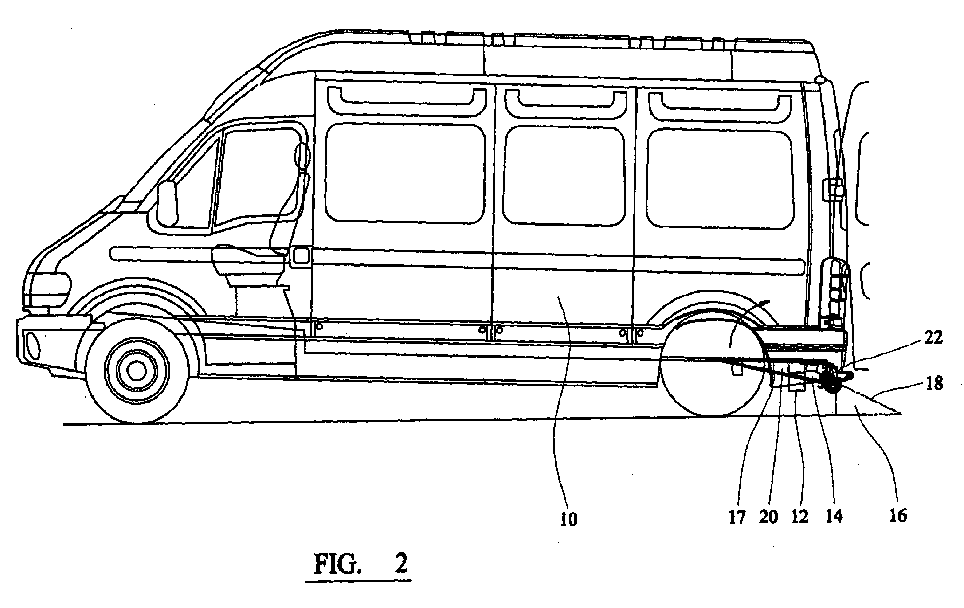

As shown in Figure 2, the vehicle, and specifically the ambulance 10, must provide access to the rear of the ambulance especially for trolleys and other apparatus to be wheeled into the ambulance 10. It is appreciated that further items need access to the rear of the ambulance 10, for example, wheel chairs and equipment, and the present invention is not limited to trolleys or to wheeled apparatus. The vehicle may be a commercial vehicle. For example a van, lorry, truck, bus or minibus where access is required or a private car or van, for example an adapted car or van providing access for a wheelchair. In addition, the access apparatus may provide ramped access or stepped access for example, stepped access for passengers in the vehicle. The ambulance 10 has access apparatus including access means in a form of a ramp portion 12 which is movable from a storage position 14 to an access position 16. The ramp portion 12 comprises a support surface 18 over which trolleys are arranged to be pushed in order to move into the ambulance 10. Accordingly, in the access position 16 the support surface 18 faces upwards and is angled downwards from the rear of the ambulance 10 to ground level. This thereby provides an inclined access surface.

When the ramp portion 12 is in the storage position 14, the support surface 18 faces downwards and the ramp portion 12 locates in a storage recess provided in the rear of the ambulance 10. The storage recess is arranged to be of substantially the same shape as the ramp portion 12 such that when the ramp portion 12 is located in the storage recess an upper surface or second support surface 17 of the ramp portion 12 is co-planar with the floor of the ambulance and completes the floor of the ambulance 10.

The ambulance has an upper access surface in the form of a second ramp portion 15 provided therein. The second ramp portion 15 defines the base of the storage recess. Accordingly, when the ramp portion 12 is in the storage position 14, the first support surface 18 of the ramp portion 12 faces and is parallel to the upper access surface 19 of the second ramp portion 15. In this position 14, the ramp portion 12 provides a second support surface 17 which is co-planar with the floor 23 of the ambulance 10. When the ramp portion 12 is in the access position 16, the access to the ambulance 10 is provided by the first support surface 18 of the ramp portion 12 and also by the support surface 19 of the second ramp portion 15. This thereby provides a contiguous ramped surface. In an alternative embodiment the upper access surface and first support surface may provide steps in order to provide a series of steps.

The ambulance 10 is provided with a rear air suspension mechanism whereby the rear of the ambulance 10 can be lowered in order to aid the rear access to the ambulance 10 and reduces the angle of the rear ramp portion 12 thereby making it easier to push a trolley up the ramp portion 12 and also the upper access surface 18. The rear of the ambulance 10 is provided with bump stops 20 onto which the rear of the ambulance 10 is lowered. Alternative means may be provided for lowering the rear of the vehicle. All kneeling and suspension lowering systems suitable for the lowering of the rear of an ambulance 10 or other vehicle may be used. However, preferably a hydraulic suspension system is used to lower the rear of the ambulance 10 or other vehicle.

The ramp portion 12 comprises drive means 22 in order to move the ramp portion 12 from the storage position 14 to the access position 16. The drive means 22 is mounted on the ramp portion 12. Accordingly, if the drive means 22 fails, the ramp portion 12 can be simply detached from the ambulance 10 and replaced with another ramp portion 12 including functioning drive means. In order to aid the detachment and replacement, the ramp portion 12 is secured to the ambulance 10 by a quick release mechanism.

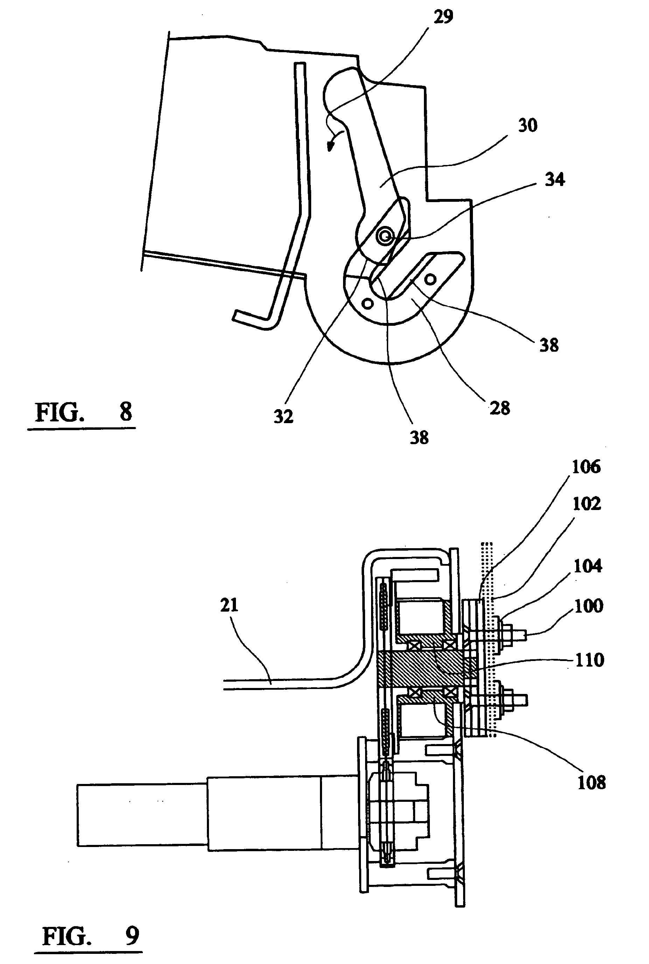

The ramp portion 12 is provided with two securement lugs 24, 26 which project outwardly from the ramp portion 12 on each lateral side of the ramp portion 12. The lugs 24, 26 are arranged to locate in securement means provided by the ambulance. As shown in Figure 8, these securement means comprise generally U-shaped portions 28 for receiving the lugs 24, 26 by a simple sliding movement. Once in position, a cam lock mechanism comprising a single lever 30 is moved in order to lock and retain the lugs 24, 26 in the U-shaped portions 28. The lever 30 is simply rotated about a pivot 34 in order to lock and retain the ramp portion 12 to the ambulance 10. The securement means comprise two levers, one for each lug 24, 26. Each lever comprises a shaped portion 32.

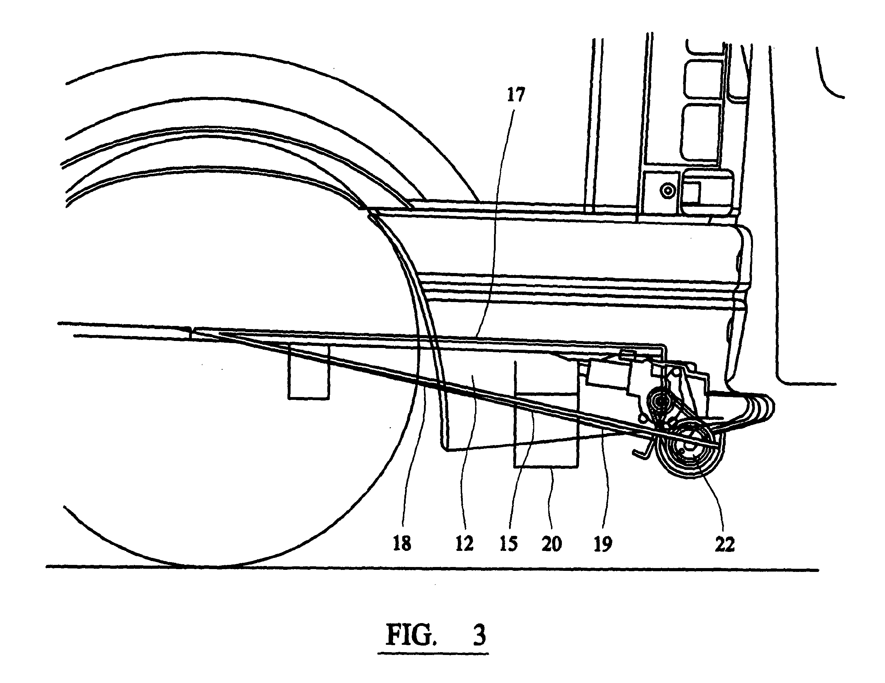

The lugs 24, 26 comprise flat sections 36 (see Figure 3) which locate in flat sections 38 of the U-shaped receiving portions 28. Once located therein the levers 30 are pivoted in the direction shown by arrow 29 in order for the shaped surface 32 of the lever 30 to rotate relative to the lug 24, 26. The shaped surface 32 provides a cam mechanism such that when the lever 30 rotates the shaped portion 32 secures and locks the lug 24, 26 relative to the vehicle. The shaped portion 32 urges the lug 24, 26 into the U-shaped receiving section 28 and retains the lug 24, 26 section in place. The flat sections 36 of the lug engage and co-operate with the flat sections 38 of the U-shaped receiving sections 28 such that the lugs 24, 26 do not rotate relative to the vehicle.

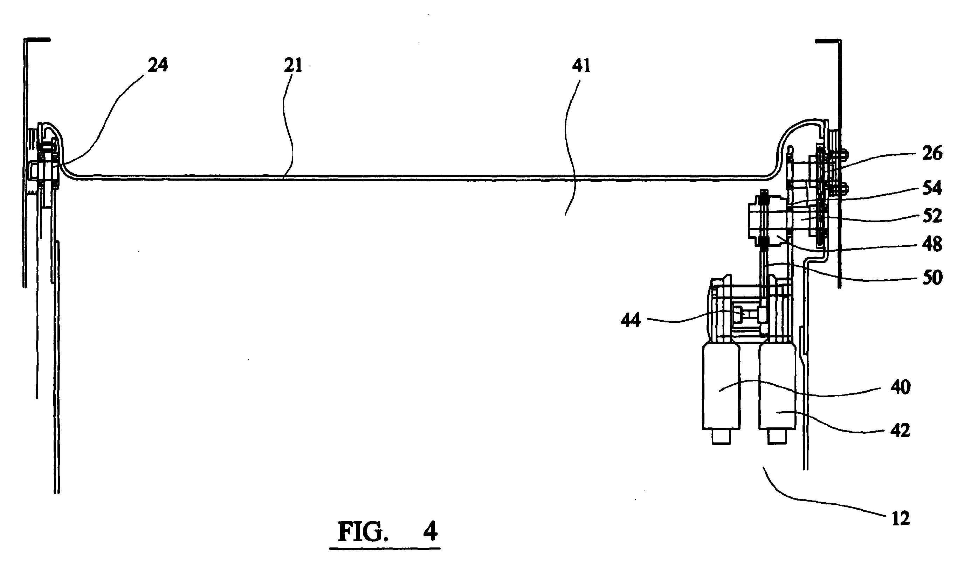

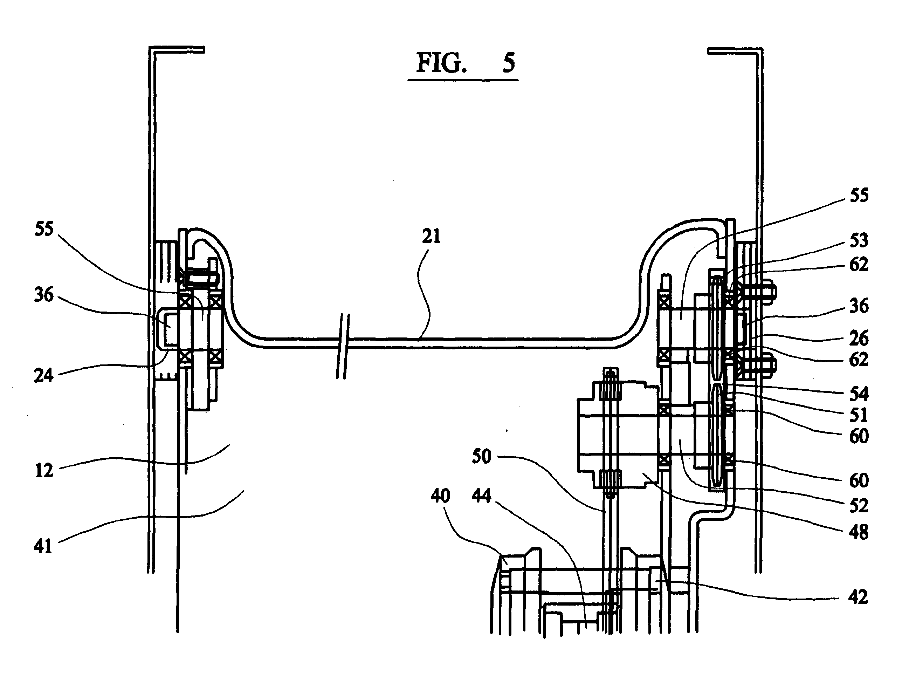

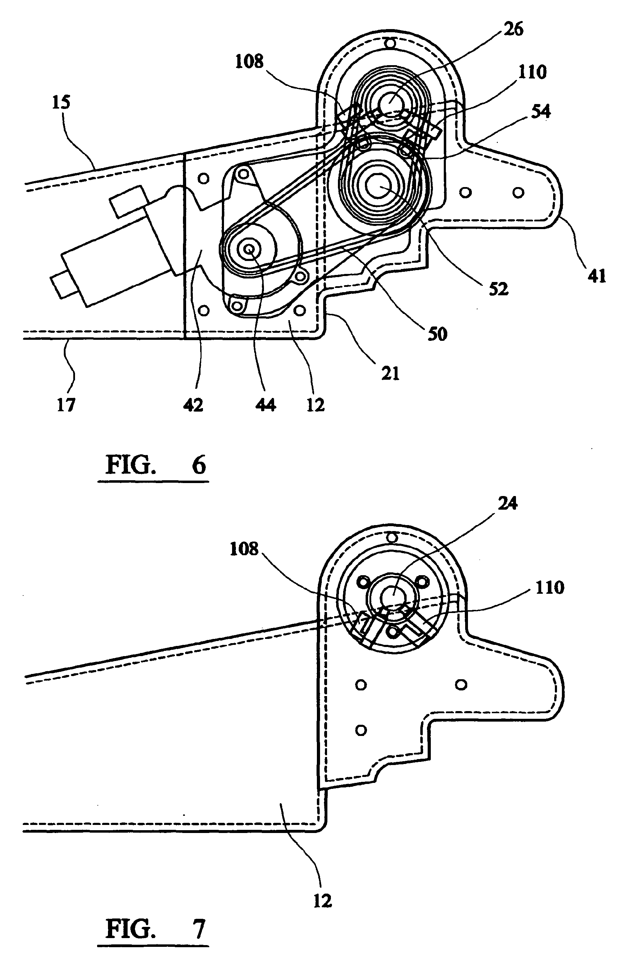

As shown in Figures 4, 5 and 6, the drive means 22 comprises an electric motor and may comprise two electric motors 40, 42 housed within the housing 41 of the ramp portion 12. The housing is defined by the first support surface 18 and second support surface 17 which are connected at one longitudinal end by a spacer wall 21. The support surfaces 18,17 taper towards each other as they extend longitudinally from the spacer wall 21 and join at the second longitudinal end. The housing is completed by side walls.

The drive shaft 44 of the electric motors 40, 42 is connected to a clutch 48 by a drive chain 50 or belt. The shaft 52 of the clutch 48 is then connected to the pivot axis of the ramp through a further chain 54 or belt. The pivot axis 55 includes the two lugs 24, 26 which are secured to the ambulance. As previously discussed, the lugs 24, 26 include flat sections 36 which engage with the securement means on the ambulance 10 and prevent the lugs 24, 26 rotating relative to the ambulance 10. Accordingly, the pivot axis does not rotate and the ramp portion 12 is arranged to pivot around the pivot axis. A gear 53 is fixed on the pivot axis to engage with the drive chain 54.

As the drive shaft 44 of the electric motors 40, 42 rotates, the drive chain 50 rotates the shaft 52 of the clutch 48. The gear wheel 51 and drive chain 54 which are securely mounted on the clutch shaft 52 then rotate. Since the gear wheel 53 on the pivot axis 55 is fixed relative to the lugs 24, 26, and the lugs 24, 26 are not rotatable relative to the ambulance 10, the clutch shaft 52 rotates around the pivot axis 55. Similarly, the drive shaft 44 and drive means 40, 42 all rotate around the pivot shaft 55 and hence the ramp portion 12 similarly pivots.

The drive shaft 44 of the electric motors 40, 42 are rotatably mounted in the ramp portion 12 by bearings (not shown). Similarly, the clutch shaft 52 is rotatbly mounted in the ramp portion 12 by bearings 60. In addition, the pivot axis 55 projects through the ramp portion 12 by bearings 62. Accordingly, the bearings enable the ramp portion 12 to pivot around the pivot axis 55.

The clutch mechanism 48 is arranged as a fail safe mechanism in the event that the ramp portion 12 abuts an obstruction. The apparatus comprises control means such that if the ramp portion 12 abuts an obstruction the electric motors 40, 42 stop and do not transmit any further force to an obstruction. The control means require the electric motors 40, 42 to be reversed away from the direction of the obstruction before the ramp portion 12 can continue its movement. Accordingly, the control means provides a fail safe mechanism which does not transmit any undue pressures to the obstruction.

The electricity supply, preferably a 12 Volt supply, is arranged to be supplied external of the ramp portion 12. For example, as shown in Figure 9, a positive or negative electrical connector is connected to a securement pin 100. The securement pin 100 is isolated from the vehicle chassis 102 by isolation spacers 104, 106. The supply is then carried by the lug 26 into the ramp portion. Copper Beryllium contacts 108, 110 are in constant contact with the outer surface of the pivot axis or shaft or lug. Wires (not shown) transfer the electricity supply to the electric motor. The lug 24 on the other lateral side of the ramp portion 12 may be arranged to supply the other electrical terminal for example the positive or negative supply to complete the circuit.

The ramp portion 12 is constructed from a composite material. Accordingly, the present invention is lighter than prior art metallic ramps and, therefore, the present invention is easier to move manually and can be moved by a single person and also reduces the injury risk.

As previously mentioned, the access means may comprise an access portion providing at least one step although preferably may have a number of steps for example, two or three. In this embodiment, the second ramp portion or upper support surface in the vehicle may also be provided with at least one step and preferably with a number of steps, for example two or three. Accordingly, the access apparatus may be arranged to provide a number of steps to provide access to the vehicle.

## Claims

1. Access apparatus for a vehicle, the apparatus comprising:
access means (12) that is movable between a storage position and an access position, wherein the access means (12) provides a generally inclined access surface (18) to a vehicle whilst in the access position; and
drive means (22) to move the access means (12) between the storage position and the access position;
**characterised in that**
the access means (12) is arranged to be releasably connected to a vehicle and
the drive means (22) is mounted on the releasably connected access means (12).

2. Access apparatus for a vehicle according to claim 1 in which the access means (12) is arranged to be releasably connected to a vehicle by a quick release mechanism.

3. Access apparatus for a vehicle according to any preceding claim in which the drive means (22) is contained within the housing of the access means.

4. Access apparatus for a vehicle according to any preceding claim in which the drive means (22) causes the access means (12) to pivot or rotate about a pivotal axis relative to the vehicle.

5. Access apparatus for a vehicle according to any preceding claim in which the apparatus comprises a power source and wherein the power source comprises the battery of the vehicle.

6. Access apparatus for a vehicle according to any preceding claim in which the access means (12) has a first support surface (18) which enables wheeled apparatus to travel thereover and into the vehicle whilst the access means is in the access position.

7. Access apparatus for a vehicle according to any preceding claim in which the access means provides a second support surface (17) when the access means (12) is in the storage position.

8. Access apparatus for a vehicle according to claim 8 in which the second support surface (17) is arranged to be co-planar with the floor of the vehicle when the access means (12) is in the storage position.

9. A vehicle having removable access apparatus, the access apparatus being in accordance with any of the preceding claims.

10. A method of providing access to a vehicle, the method comprising providing access apparatus for the vehicle, the access apparatus comprising access means (12) that is movable between a storage position and an access position, wherein the access means (12) provides a first support surface (18) whilst in the access position; and
drive means (22) to move the access means relative to the vehicle between the storage position and the access position; and **characterised in that**
the method includes causing the drive means to move the access means, wherein the access means is arranged to be releasably connected to a vehicle and the drive means (22) is mounted on the releasably connected access means (12).

## Patentansprüche

1. Zugangsvorrichtung für ein Fahrzeug, wobei die Vorrichtung umfasst:
Zugangsmittel (12), welches zwischen einer Aufbewahrungsposition und einer Zugangsposition bewegbar ist, wobei das Zugangsmittel (12) in der Zugangsposition eine im Wesentlichen geneigte Zugangsfläche (18) zu einem Fahrzeug bietet; und
Antriebsmittel (22) um das Zugangsmittel (12) zwischen der Aufbewahrungsposition und der Zugangsposition zu bewegen;
**dadurch gekennzeichnet, dass**
das Zugangsmittel (12) angeordnet ist, um lösbar an einem Fahrzeug befestigt zu werden und das Antriebsmittel (22) am lösbar befestigten Zugangsmittel (12) angebracht ist.

2. Zugangsvorrichtung für ein Fahrzeug nach Anspruch 1, bei welcher das Zugangsmittel (12) angeordnet ist, um lösbar über eine Schnellauslöseeinrichtung mit einem Fahrzeug verbunden zu werden.

3. Zugangsvorrichtung für ein Fahrzeug nach einem der vorangegangenen Ansprüche, bei welcher das Antriebsmittel (22) innerhalb des Gehäuses des Zugangsmittels enthalten ist.

4. Zugangsvorrichtung für ein Fahrzeug nach einem der vorangegangenen Ansprüche, bei welcher das Antriebsmittel (22) bewirkt, dass das Zugangsmittel (12) um eine Schwenkachse relativ zum Fahrzeug schwenkt oder rotiert.

5. Zugangsvorrichtung für ein Fahrzeug nach einem der vorangegangenen Ansprüche, bei welcher die Vorrichtung eine Energiequelle umfasst und wobei die Energiequelle die Batterie des Fahrzeugs umfasst.

6. Zugangsvorrichtung für ein Fahrzeug nach einem der vorangegangenen Ansprüche, bei welcher das Zugangsmittel (12) eine erste Stützfläche (18) aufweist, welche es Vorrichtungen mit Rädern erlaubt, darüber und in das Fahrzeug zu fahren, während sich das Zugangsmittel in der Zugangsposition befindet.

7. Zugangsvorrichtung für ein Fahrzeug nach einem der vorangegangenen Ansprüche, bei welcher das Zugangsmittel eine zweite Stützfläche (17) bietet, wenn das Zugangsmittel (12) in der Aufbewahrungsposition ist.

8. Zugangsvorrichtung für ein Fahrzeug nach Anspruch 7, bei welcher die zweite Stützoberfläche (17) angeordnet ist, um co-planar mit dem Boden des Fahrzeugs zu sein, wenn das Zugangsmittel (12) in der Aufbewahrungsposition ist.

9. Fahrzeug mit lösbarer Zugangsvorrichtung, nach einem der vorangegangenen Ansprüchen ist.

10. Verfahren zum Schaffen von Zugang zu einem Fahrzeug, wobei das Verfahren die Bereitstellung einer Zugangsvorrichtung für das Fahrzeug umfasst, wobei die Zugangsvorrichtung ein Zugangsmittel (12) umfasst, welches zwischen einer Aufbewahrungsposition und einer Zugangsposition bewegbar ist, wobei das Zugangsmittel (12) in der Zugangsposition eine erste Stützoberfläche (18) aufweist; und
Antriebsmittel (22) um das Zugangsmittel relativ zum Fahrzeug zwischen einer Aufbewahrungsposition und einer Zugangsposition zu bewegen, umfasst; und **dadurch gekennzeichnet ist, dass**
das Verfahren das Veranlassen des Antriebsmittels, das Zugangsmittel zu bewegen, umfasst, wobei das Zugangsmittel angeordnet ist, um lösbar mit einem Fahrzeug verbunden zu sein und das Antriebsmittel (22) am lösbar befestigten Zugangsmittel (12) angebracht ist.

## Revendications

1. Dispositif d'accès pour un véhicule, le dispositif comprenant :
un moyen d'accès (12) qui est mobile entre une position de stockage et une position d'accès, dans lequel le moyen d'accès (12) offre une surface d'accès (18) globalement inclinée à un véhicule lorsqu'il est dans la position d'accès ; et
un moyen d'entraînement (22) pour déplacer le moyen d'accès (12) entre la position de stockage et la position d'accès ;
***caractérisé en ce que***
le moyen d'accès (12) est agencé de manière à être relié de manière libérable à un véhicule et
le moyen d'entraînement (22) est monté sur le moyen d'accès (12) relié de manière libérable.

2. Dispositif d'accès pour un véhicule selon la revendication 1, dans lequel le moyen d'accès (12) est agencé de manière à être relié de manière libérable à un véhicule par un mécanisme à décrochage rapide.

3. Dispositif d'accès pour un véhicule selon l'une quelconque des revendications précédentes, dans lequel le moyen d'entraînement (22) est contenu dans le logement du moyen d'accès.

4. Dispositif d'accès pour un véhicule selon l'une quelconque des revendications précédentes, dans lequel le moyen d'entraînement (22) provoque le pivotement ou la rotation du moyen d'accès (12) autour d'un axe de pivot en relation avec le véhicule.

5. Dispositif d'accès pour un véhicule selon l'une quelconque des revendications précédentes, dans lequel le dispositif comprend une source d'énergie et dans lequel la source d'énergie comprend la batterie du véhicule.

6. Dispositif d'accès pour un véhicule selon l'une quelconque des revendications précédentes, dans lequel le moyen d'accès (12) possède une première surface de support (18) qui permet à un dispositif équipé de roues de circuler dessus et d'entrer dans le véhicule pendant que le moyen d'accès est dans la position d'accès.

7. Dispositif d'accès pour un véhicule selon l'une quelconque des revendications précédentes, dans lequel le moyen d'accès offre une deuxième surface de support (17) lorsque le moyen d'accès (12) est dans la position de stockage.

8. Dispositif d'accès pour un véhicule selon la revendication 8, dans lequel la deuxième surface de support (17) est disposée pour être coplanaire avec le plancher du véhicule lorsque le moyen d'accès (12) est dans la position de stockage.

9. Véhicule ayant un dispositif d'accès amovible, le dispositif d'accès étant selon l'une quelconque des revendications précédentes.

10. Procédé pour fournir un accès à un véhicule, le procédé comprenant la fourniture d'un dispositif d'accès pour le véhicule, le dispositif d'accès comprenant un moyen d'accès (12) qui est mobile entre une position de stockage et une position d'accès, dans lequel le moyen d'accès (12) offre une première surface d'accès (18) lorsqu'il est en position d'accès ; et
un moyen d'entraînement (22) pour déplacer le moyen d'accès en relation avec le véhicule entre la position de stockage et la position d'accès ; et ***caractérisé en ce que***
le procédé comprend de faire que le moyen d'entraînement déplace le moyen d'accès (12), dans lequel le moyen d'accès est agencé de manière à être relié de manière libérable à un véhicule et le moyen d'entraînement (22) est monté sur le moyen d'accès (12) relié de manière libérable.
